**Europäisches Patentamt**

(19) **European Patent Office**

**Office européen des brevets**

(11) Numéro de publication: **0 123 603**
**B1**

(12) **FASCICULE DE BREVET EUROPÉEN**

(45) Date de publication du fascicule du brevet:
**29.06.88**

(51) Int. Cl.⁴: **G 21 C 7/20**

(21) Numéro de dépôt: **84400715.3**

(22) Date de dépôt: **11.04.84**

(54) **Dispositif de freinage de l'élément mobile d'un assemblage absorbant d'un réacteur nucléaire à neutrons rapides.**

(30) Priorité: **15.04.83 FR 8306164**

(43) Date de publication de la demande:
**31.10.84 Bulletin 84/44**

(45) Mention de la délivrance du brevet:
**29.06.88 Bulletin 88/26**

(84) Etats contractants désignés:
**BE DE GB IT NL**

(56) Documents cité:
**FR-A-1 438 834**
**FR-A-1 567 000**
**FR-A-2 413 756**
**GB-A-1 112 346**

(73) Titulaire: **NOVATOME, La Boursidière R.N. 186,
F-92357 Le Plessis Robinson (FR)**

(72) Inventeur: **Berte, Michel, 58 rue du Repos, F-69007
Lyon (FR)**
Inventeur: **Chiarelli, Gérard, 5 rue Jules Verne,
F-69330 Jomage (FR)**

(74) Mandataire: **Pottier, Pierre Société BREVATOME,
25, Rue de Ponthieu, F-75008 Paris (FR)**

## Description

L'invention concerne un dispositif de freinage de l'élément mobile d'un assemblage absorbant d'un réacteur nucléaire à neutrons rapides refroidi par un métal liquide.

Dans les réacteurs nucléaires à neutrons rapides, le coeur est constitué par différentes sortes d'assemblages de forme prismatique disposés verticalement et côte à côte à l'intérieur de la cuve du réacteur remplie d'un métal liquide de refroidissement qui est généralement du sodium.

La plupart de ces assemblages renferment du matériau combustible fissile ou fertile participant à l'activité neutronique dans le coeur.

D'autres assemblages sont utilisés pour le pilotage ou l'arrêt du réacteur et renferment du matériau absorbant les neutrons. Ces assemblages absorbants comportent une partie fixe engagée par sa partie inférieure dans le support de coeur et un élément qui renferme le matériau absorbant mobile verticalement à l'intérieur du fourreau.

La commande du réacteur nucléaire est obtenue par déplacement de l'élément mobile à l'intérieur du fourreau dans la direction verticale, ce qui provoque une insertion plus ou moins importante de la partie de l'élément mobile renfermant le matériau absorbant les neutrons dans le coeur du réacteur. Pour l'arrêt du réacteur, on introduit en position d'insertion maximum dans le coeur du réacteur les éléments mobiles de tous les assemblages absorbants.

Les fourreaux de guidage des assemblages absorbants comportent des ouvertures à leur partie inférieure pour permettre au métal liquide de pénétrer dans leur volume interne où il circule de bas en haut sur toute la hauteur du coeur.

L'élément mobile disposé à l'intérieur du fourreau comporte une enveloppe creuse, renfermant le matériau absorbant les neutrons, solidaire à sa partie supérieure d'un moyen de liaison à un dispositif de déplacement de l'élément mobile dans la direction verticale et solidaire à sa partie inférieure d'une tige de guidage de grande longueur verticale creuse dont l'espace intérieur est en communication avec le volume interne de l'enveloppe creuse renfermant le matériau absorbant les neutrons. A sa partie inférieure la tige de commande comporte des ouvertures qui permettent au métal liquide pénétrant dans le fourreau de parcourir la tige de guidage et l'enveloppe creuse de bas en haut pour le refroidissement du matériau absorbant les neutrons qui est généralement du carbure de bore $B_4C$.

La tige de guidage a une hauteur au moins égale à la hauteur de l'enveloppe creuse qui est elle-même identique à la hauteur du coeur, c'est-à-dire à la hauteur de la zone active des assemblages combustibles fissiles. Cette tige permet donc de guider l'élément mobile dans tous ses déplacements entre sa position d'insertion maximum où l'enveloppe renfermant le matériau absorbant occupe toute la hauteur du coeur et sa position d'extraction maximum, où l'enveloppe renfermant le matériau absorbant est entièrement sortie du coeur. Dans toutes ces positions, lors de son déplacement vertical, l'élément mobile est d'une part guidé à l'intérieur du fourreau et d'autre part alimenté en sodium liquide de refroidissement.

Dans le cas d'un arrêt d'urgence du réacteur, l'élément mobile doit être enfoncé très rapidement à l'intérieur du fourreau soit seul soit avec la partie mobile de son mécanisme de déplacement. L'ensemble mobile dont le poids est important doit être arrêté en fin de son mouvement rapide vers le bas par la partie inférieure du fourreau engagée dans le supportage du coeur qui doit absorber l'énergie cinétique de l'ensemble mobile. Des chocs peuvent endommager de façon dangereuse le dispositif de supportage du coeur.

L'arrêt d'urgence étant obtenu généralement par chute de l'élément mobile sous l'effet de son poids, la vitesse en fin de course de cet élément mobile peut être très importante. Il en est de même dans le cas où l'élément mobile se désolidarise accidentellement de son mécanisme de déplacement vertical.

On prévoit donc un dispositif amortisseur constitué par un dash pot hydraulique susceptible d'absorber l'énergie de l'élément mobile lors de sa chute. Cet amortisseur peut être placé sur le mécanisme de déplacement de l'élément mobile mais l'effet d'amortissement n'est pas obtenu lors d'une rupture entraînant une désolidarisation de la partie mobile par rapport au mécanisme. En outre, de tels dispositifs amortisseurs indépendants de l'assemblage absorbant lui-même peuvent connaître des défauts de fonctionnement les rendant inefficaces.

On a donc proposé des dispositifs de freinage intégrés à l'assemblage absorbant lui-même par exemple dans le brevet français 2.251.079. Ces dispositifs de freinage étaient placés dans la partie supérieure de l'assemblage, ce qui présente certains inconvénients puisque le dispositif de freinage est alors dans la partie la plus chaude du coeur dans laquelle circule le sodium liquide avant sa sortie dans le collecteur chaud du réacteur. C'est en outre dans cette zone que les déplacements latéraux de l'élément mobile de l'assemblage absorbant dus aux contraintes thermiques, mécaniques ou neutroniques sont les plus importants puisque cet élément mobile est maintenu surtout par sa partie inférieure qui constitue une tige de guidage.

Le dispositif amortisseur décrit dans le brevet français 2.251.079 est applicable de préférence dans le cas d'un élément mobile absorbant constitué par des éléments articulés les uns aux autres sans liaison avec le pied.

On connaît également le FR-A 2 413 756 qui est relatif à un tube guide ondulé pour amortir la chute d'une barre de commande d'un réacteur nucléaire. Ce brevet décrit à propos de l'art antérieur et en se référant à la fig. 1, un amortisseur hydraulique dans lequel une barre de commande 18 coulisse verticalement dans un tube guide 12. Ce tube guide comporte une partie supérieure nettement plus large que le diamètre de la barre de commande 18 et une partie inférieure rétrécie avec un diamètre fortement réduit qui est seulement légèrement plus grand que le diamètre extérieur de la barre de commande 18 de façon à délimiter un espace annulaire 19 entre la barre de commande et la partie inférieure 12" du tube guide 12. Ce système constitue un amortisseur de freinage hydraulique efficace et une série de trous 22 sont pratiqués à l'extrémité inférieure de la partie supérieure élargie du tube guide 12 pour permettre l'évacuation de l'eau lors de l'enfoncement de la barre de commande 18. Un tel dispositif qui comporte une barre de commande 18 unique ne pourrait être appliqué au cas des réacteurs nucléaires à neutrons rapides où les assemblages absorbants sont constitués d'un ensemble de barres absorbantes juxtaposées et d'une dimension transversale beaucoup plus considérable.

Dans le cas d'un élément rigide constitué par une enveloppe creuse renfermant le matériau absorbant solidaire d'une tige de guidage constituant sa partie inférieure, un tel dispositif amortisseur situé dans la partie supérieure du fourreau de guidage ne peut être utilisé sans risque en particulier de coincement.

Le but de l'invention est donc de proposer un assemblage absorbant d'un réacteur nucléaire à neutrons rapides refroidi par un métal liquide circulant au contact du coeur du réacteur dans lequel sont placés des assemblages semblables absorbant les neutrons comportant un dispositif de freinage avec une partie fixe constituée par un fourreau de guidage de l'élément mobile dans la direction verticale, engagée par sa partie inférieure dans le support de coeur et parcourue intérieurement par le métal liquide, ledit dispositif de freinage étant constitué par une partie de la surface interne de l'extrémité inférieure du fourreau et par une partie de l'extrémité inférieure d'une tige de guidage coopérant en fin de course vers le bas de la tige de guidage pour constituer une chambre ayant un faible espace de fuite pour le métal liquide de refroidissement caractérisé par un élément mobile constitué par une enveloppe creuse renfermant un matérau absorbant les neutrons solidaire, à sa partie supérieure d'un moyen de liaison (13) à un mécanisme de déplacement dans la direction verticale et, a sa partie inférieure, la tige de guidage creuse verticale et de grande longueur comportant des ouvertures (18) à sa partie inférieure pour le passage du métal liquide à l'intérieur de la tige (14) et de l'enveloppe (12) du matériau absorbant (15) pour son refroidissement et par le fait que la surface interne de la partie inférieure du fourreau porte un cylindre (25) d'axe vertical ouvert dans l'espace intérieur du fourreau (1a) à son extrémité communiquant avec cet espace intérieur uniquement par un orifice de petit diamètre à son extrémité inférieure et comportant des ouvertures de passage du sodium dans sa surface latérale à sa partie supérieure, et que l'extrémité inférieure de la tige de guidage porte une sphère de diamètre très légèrement inférieur au diamètre du cylindre dans sa partie inférieure, une chambre de compression du métal liquide étant ménagée en fin de mouvement vers le bas de l'ensemble mobile par la sphère et la partie inférieure du cylindre comportant l'espace de fuite de petit diamètre.

Dans ce but, le dispositif de freinage est constitué par une partie de la surface interne de l'extrémité inférieure du fourreau et par une partie de l'extrémité inférieure de la tige de guidage coopérant en fin de course, vers le bas de la tige de guidage, pour constituer une chambre ayant un faible espace de fuite pour le métal liquide de refroidissement.

Afin de bien faire comprendre l'invention, on va maintenant décrire, à titre d'exemples non limitatifs, en se référant aux figures jointes en annexe, plusieurs modes de réalisation d'un dispositif de freinage suivant l'invention.

La figure 1a est une vue en coupe par un plan de symétrie vertical d'un assemblage absorbant comportant un dispositif de freinage suivant l'invention, dont l'élément mobile est en position totalement insérée.

La figure 1b est une vue en coupe de l'assemblage absorbant représenté à la figure 1a, avec l'élément mobile dans sa position correspondant à l'extraction complète.

La figure 1c représente une vue en coupe d'une variante d'exécution de la partie inférieure de l'assemblage.

La figure 2a est une vue en coupe par un plan vertical de symétrie d'un assemblage absorbant comportant un dispositif de freinage suivant l'invention et suivant un second mode de réalisation.

La figure 2b est une vue en coupe de l'assemblage représenté à la figure 2a avec l'élément mobile en position correspondant à l'extraction complète.

La figure 3a est une vue en coupe par un plan vertical de symétrie d'un assemblage absorbant comportant un dispositif de freinage suivant l'invention et suivant un troisième mode de réalisation, l'élément mobile étant dans sa position totalement insérée.

La figure 3b est une vue en coupe de l'assemblage absorbant représenté à la figure 3a avec son élément mobile dans la position correspondant à l'extraction complète.

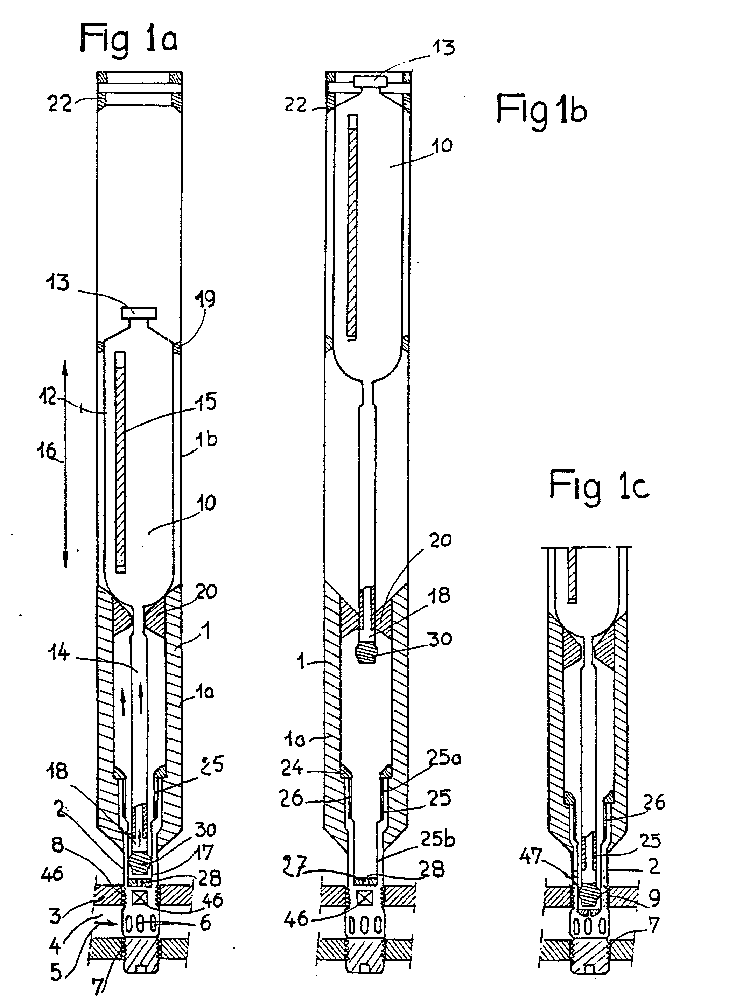

Sur les figures 1a et 1b, on voit le fourreau 1 d'un assemblage absorbant d'un réacteur nucléaire à neutrons rapides dont l'extrémité inférieure 2 à faible diamètre est engagée à l'intérieur du sommier 3 servant au supportage des assemblages combustibles du coeur du réacteur nucléaire, que ces assemblages soient fertiles, fissiles ou absorbants.

La partie centrale 4 du sommier 3 est creuse et en communication avec la sortie des pompes de circulation du sodium liquide dans la cuve du réacteur nucléaire pour l'envoi d'un flux de sodium liquide froid à la base du coeur du réacteur nucléaire. Ce sodium froid circule dans la direction des flèches 5 et pénètre dans le volume interne du fourreau 1 par des ouvertures 6 ménagées dans sa partie inférieure 2 et en communication avec l'espace interne du fourreau 1. Au-dessus des ouvertures 6 à l'intérieur se trouve un système déprimogène 46 destiné à calibrer le débit de sodium. En effet, il est nécessaire de limiter le débit du sodium de refroidissement dans les assemblages absorbants dont le dégagement de chaleur est très inférieur à celui des assemblages combustibles.

De part et d'autre de la partie centrale creuse 4 du sommier 3, des joints à labyrinthe 7 et 8 sont intercalés entre la surface extérieure du fourreau et la surface des ouvertures de passage du fourreau dans le sommier, de part et d'autre des ouvertures 6.

L'effet labyrinthe de ces joints 7 et 8 permet de réaliser un verrouillage hydraulique du fourreau dans le sommier, le sodium baignant l'assemblage exerçant une force dirigée vers le bas sur celui-ci.

Le fourreau 1 comporte une partie inférieure 1$_a$ reliée à sa partie inférieure au pied de l'assemblage 2 et à un tube 1$_b$ de plus faible épaisseur que la partie 1$_a$ à sa partie supérieure.

La partie tubulaire supérieure 1$_b$ est ouverte à son extrémité pour la sortie du sodium liquide de refroidissement.

L'élément mobile 10 de l'assemblage absorbant visible dans sa position basse à la figure 1a et dans sa position haute à la figure 1b comporte une enveloppe creuse de grand diamètre 12 renfermant des barres de carbure de bore absorbant les neutrons 15, une pièce 13 d'accrochage d'un moyen de levage de l'élément mobile à sa partie supérieure et une tige de guidage 14 constituant sa partie inférieure.

La tige de guidage 14 est creuse, de grande longueur et disposée suivant l'axe vertical de l'assemblage. L'espace intérieur de cette tige de guidage 14 est en communication avec l'espace intérieur de l'enveloppe 12. Cette tige 14 comporte des ouvertures 18 à sa partie inférieure pour le passage du sodium de refroidissement dans l'espace intérieur de la tige de commande puis dans l'enveloppe 12 du matériau absorbant.

A l'intérieur de la partie supérieure 1$_b$ du fourreau 1 est disposée une bague de guidage 19 de l'enveloppe 12 et à l'intérieur de la partie inférieure 1$_a$ du fourreau est disposée une bague de guidage 20 de la tige 14.

A l'extrémité supérieure de la partie tubulaire 1$_b$ du fourreau 1 est disposée une bague d'arrêt 22 constituant une butée pour l'ensemble mobile 10 dans sa position haute comme représenté à la figure 1b.

L'ensemble mobile 10 peut être déplacé par un mécanisme non représenté aux figures 1a et 1b, dans la direction verticale, entre sa position haute et sa position basse.

La position haute de l'ensemble mobile 10 correspond à une extraction totale des barres absorbantes 15 de la zone 16 correspondant à la partie utile du coeur du réacteur.

La position basse correspond à une insertion totale des barres 15 dans la partie utile 16 du coeur.

Le dispositif de freinage suivant l'invention comporte dans la partie inférieure 1$_a$ du fourreau 1 une bague 24 permettant la fixation d'un cylindre 25 comportant une partie supérieure 25$_a$ à grand diamètre et une partie inférieure 25$_b$ à petit diamètre. Le cylindre 25 constitue une partie de la surface interne de l'extrémité inférieure du fourreau. La partie 25$_a$ du cylindre est ouverte à son extrémité supérieure vers l'espace interne de la partie 1$_a$ du fourreau. Cette partie 25$_a$ comporte des ouvertures latérales 26 mettant en communication l'espace annulaire compris entre le cylindre 25 et la surface interne de la partie 1$_a$ du fourreau avec la partie supérieure du volume interne dece fourreau 1$_a$.

L'extrémité inférieure de la partie 25$_b$ du cylindre est fermée par un disque 27 percé à sa partie centrale d'une ouverture calibrée de très faible diamètre 28.

La tige de guidage 14 est solidaire à sa partie inférieure, en dessous des ouvertures 18, d'une sphère métallique pleine 30 d'un diamètre très légèrement inférieur au diamètre intérieur de la partie 25$_b$ du cylindre 25.

En se reportant aux figures 1a et 1b, on voit que le sodium froid sous pression arrivant suivant la direction des flèches 5 et pénétrant dans le fourreau par les ouvertures 6 s'écoule dans l'espace annulaire entre le cylindre 25 et la partie inférieure 1$_a$ du fourreau, puis pénètre par les ouvertures 26 dans le cylindre 25 dans lequel débouchent les ouvertures 18 de la partie inférieure de la tige 14 lorsque celle-ci est en position basse.

Lorsque la tige est en position haute, le sodium remonte dans la partie 1$_a$ du fourreau avant de pénétrer dans l'espace intérieur de la tige de guidage 14 par les ouvertures 18, en-dessous de la bague de guidage 20.

Dans tous les cas, le sodium pénètre à l'intérieur de la tige de guidage 14, circule dans celle-ci de bas en haut et vient refroidir les barres de matériau absorbant 15 à l'intérieur de l'enveloppe 12. Le sodium ressort ensuite par l'extrémité supérieure de l'enveloppe 12, au niveau de la pièce 13 pour ressortir dans la cuve du réacteur à la partie supérieure du fourreau 1$_b$.

Lorsque l'ensemble mobile 10 retombe sous l'effet de son propre poids, soit pour un arrêt d'urgence du réacteur, soit accidentellement, la liaison entre la pièce 13 et le mécanisme de déplacement de l'ensemble mobile étant interrompue, il vient en position basse comme représenté à la figure 1a. En fin de mouvement vers le bas, le sphère 30 emprisonne du sodium liquide à l'intérieur de la partie 25$_b$ du cylindre dont la seule ouverture de fuite est le trou calibré de petit diamètre 28.

Il y a donc un effet de dash-pot qui amortit et freine la chute de l'ensemble mobile 10 en fin de mouvement vers le bas.

Dans tous les cas la circulation du sodium liquide à l'intérieur de l'élément mobile est assurée sans contrainte.

Sur la figure 1c, on voit une variante de disposition du dispositif déprimogène 46. Ce dispositif 47 est constitué principalement par un labyrinthe disposé dans l'espace annulaire entre le cylindre 25 et la surface intérieure du pied d'assemblage 2.

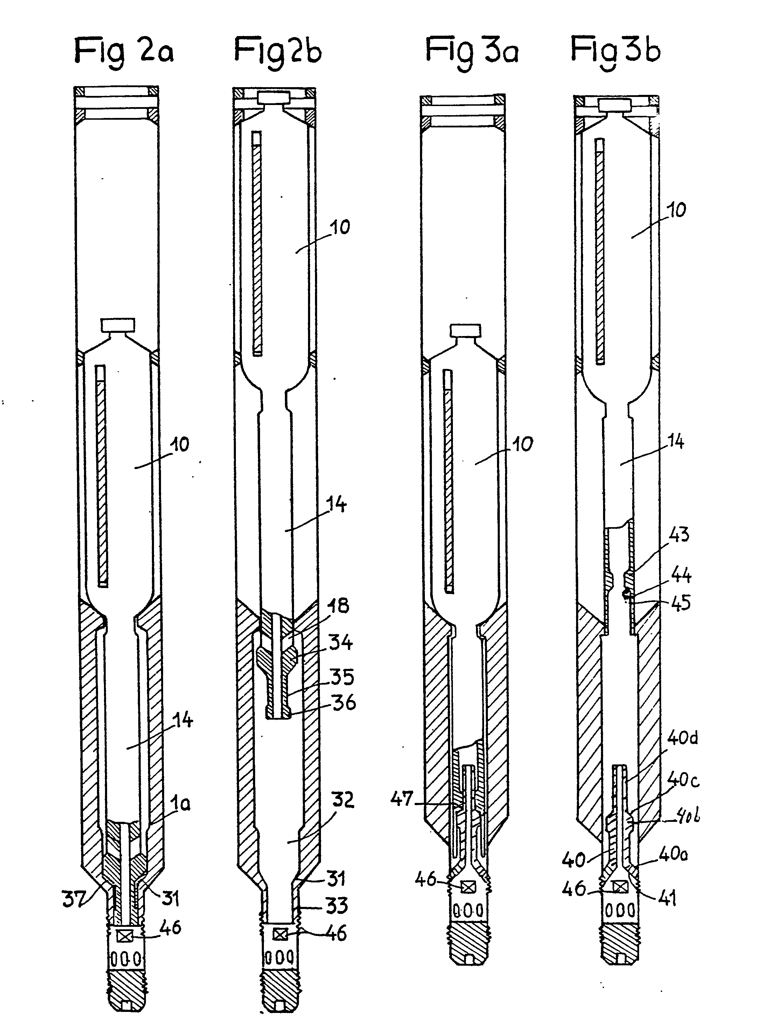

Sur les figures 2a et 2b, on voit un second mode de réalisation du dispositif de freinage suivant l'invention.

Sur ces deux figures, les éléments équivalant aux éléments déjà décrits en se référant aux figures 1a et 1b ont été désignés par les mêmes repères.

La surface interne de l'extrémité inférieure de la partie 1$_a$ du fourreau comporte une portée tronconique 31 et une partie cylindrique 32 au-dessus de cette portée tronconique 31.

La partie inférieure de la tige de guidage 14 est usinée de façon à constituer une partie cylindrique à grand diamètre 34 dont le diamètre externe est très légèrement inférieur au diamètre intérieur de la partie cylindrique 32 de la surface interne du fourreau. La partie inférieure de la tige 14 comporte également une partie à faible diamètre 35 terminée par une partie cylindrique 36 dont le diamètre un peu supérieur au diamètre de la partie 35 est très légèrement inférieur au diamètre intérieur d'une partie cylindrique 33 de la surface interne du fourreau disposée en-dessous de la portée tronconique 31.

L'espace intérieur creux de la tige 14 est mis en communication avec l'espace intérieur du fourreau par des ouvertures 18 disposées au dessus de la partie cylindrique 34 de cette tige de guidage 14.

Lorsque l'élément mobile 10 retombe sous l'effet de son poids soit lors d'un arrêt d'urgence du réacteur, soit accidentellement, la partie cylindrique 34 vient s'engager dans l'alésage 32 en même temps de la partie cylindrique 36 vient s'engager dans l'alésage 33.

On constitue ainsi une chambre annulaire 37 entre la partie à grand diamètre 34 de la tige 14 et la portée tronconique 31, dans laquelle du sodium liquide est emprisonné, comme visible à la figure 2a.

Le sodium liquide ne peut s'échapper de cette chambre de compression 37 que par l'espace annulaire de très faible dimension entre la partie 36 de la tige et l'alésage intérieur 33 du fourreau 1.

On réalise ainsi un amortisseur du type dash-pot qui permet de freiner l'ensemble mobile dans la dernière partie de son mouvement vers le bas.

Sur les figures 3e et 3b, on a représenté un troisième mode de réalisation d'un dispositif de freinage suivant l'invention.

La surface interne de l'extrémité inférieure du fourreau comporte une partie profilée 40 constituée par un élément tubulaire de forme spéciale soudé sur la partie inférieure du fourreau. Cette pièce tubulaire 40 comporte une extrémité inférieure évasée de forme tronconique 40$_a$ percée de trous 41 et une partie centrale cylindrique 40$_b$ terminée par une portée tronconique 40$_c$ La partie supérieure de la pièce 40 est constituée par un tube 40$_d$.

La tige de guidage 14 comporte sur sa surface intérieure une partie en saillie 43 dont le diamètre intérieur est très légèrement supérieur au diamètre extérieur de la partie tubulaire 40$_d$ de la pièce 40.

Cette partie en saillie 43 se termine par une portée tronconique 44.

En-dessous de la portée tronconique 44, la tige de commande comporte une partie tubulaire 45 dont le diamètre intérieur est très légèrement supérieur au diamètre extérieur de la partie cylindrique en saillie 40$_b$ de la pièce 40.

Lorsque l'ensemble mobile 10 retombe en position d'insertion maximum comme représenté à la figure 3a, une chambre de compression du sodium liquide 47 est constituée par la coopération, en fin de course de l'ensemble mobile, de la partie en saillie 43 de la tige de guidage 14 et de la partie en saillie 40$_b$ de la pièce 40.

Cette chambre annulaire est limitée par les surfaces tronconiques en vis à vis 44 et 40$_c$.

Le sodium liquide comprimé dans cette chambre ne peut s'échapper que par l'espace annulaire de très faible dimension ménagé entre la partie tubulaire 45 de la tige 14 et la partie 40$_b$ de la pièce 40.

Dans le cas des dispositifs de freinage représentés aux figures 2a et 2b et aux figures 3a et 3b, le sodium liquide de refroidissement du matériau absorbant continue dans tous les cas à circuler dans l'alésage interne de la tige de guidage 14, soit directement, cet alésage débouchant dans le fourreau, soit par l'intermédiaire de la pièce tubulaire 40, dans le cas du dispositif de freinage représenté à la figure 3a, lorsque l'ensemble mobile est en position basse.

On voit que les principaux avantages du dispositif suivant l'invention sont de permettre un fonctionnement très sûr et très efficace du dispositif amortisseur dont la mise en place dans l'assemblage absorbant ne nécessite que des modifications mineures de celui-ci.

Le dispositif de freinage est entièrement dans la partie basse de l'assemblage, dans une zone où les déplacements latéraux de la tige de guidage sont faibles. Cette tige de guidage peut donc s'engager facilement sur le dispositif complémentaire de freinage porté par la surface interne du fourreau.

L'invention ne se limite pas aux modes de réalisation qui viennent d'être décrits ; c'est ainsi qu'on peut imaginer d'autres modes de réalisation de surfaces antagonistes sur la tige de commande et sur la surface interne du fourreau, pour la réalisation d'une chambre de compression du métal liquide produisant un effet d'amortissement par effet de dash-pot.

Enfin, le dispositif de freinage suivant l'invention s'applique dans le cas de tous les assemblages absorbants d'un réacteur nucléaire à neutrons rapides refroidi par du métal liquide.

## Revendications

1. Assemblage absorbant d'un réacteur nucléaire à neutrons rapides, refroidi par un métal liquide circulant au contact du coeur du réacteur, dans lequel sont placés des assemblages semblables absorbant les neutrons, comportant un dispositif de freinage avec une partie fixe constituée par un fourreau de guidage (1) d'un élément mobile (10) dans la direction verticale, engagée par sa partie inférieure dans le support de coeur (3) et parcourue intérieurement par le métal liquide, ledit dispositif de freinage étant constitué par une partie (25; 31; 40) de la surface interne de l'extrémité inférieure du fourreau (1) et par une partie (30; 34; 43) de l'extrémité inférieure d'une tige de guidage (14), coopérant en fin de course vers le bas de la tige de guidage (14) pour constituer une chambre (17; 37; 47) ayant un faible espace de fuite (28) pour le métal liquide de refroidissement caractérisé par un élément mobile (10) constitué par une enveloppe creuse (12) renfermant un matériau absorbant les neutrons, solidaire, à sa partie supérieure d'un moyen de liaison (13) à un mécanisme de déplacement dans la direction verticale età sa partie inférieure, la tige de guidage (14) creuse, verticale et de grande longueur comportant des ouvertures (18) à sa partie inférieure pour le passage du métal liquide à l'intérieur de la tige (14) et de l'enveloppe (12) du matériau absorbant (15) pour son refroidissement et par le fait que la surface interne de la partie inférieure du fourreau porte un cylindre (25) d'axe vertical ouvert dans l'espace intérieur du fourreau (1a) à son extrémité supérieure, communiquant avec cet espace intérieur uniquement par un orifice de petit diamètre (28) à son extrémité inférieure et comportant des ouvertures de passage du sodium (26) dans sa surface latérale à sa partie supérieure, et que l'extrémité inférieure de la tige de guidage (14) porte une sphère (30) de diamètre très légèrement inférieur au diamètre du cylindre (25) dans sa partie inférieure, une chambre de compression du métal liquide étant ménagée en fin de mouvement vers le bas de l'ensemble mobile (10) par la sphère (30) et la partie inférieure du cylindre (25) comportant l'espace de fuite de petit diamètre (28).

2. Assemblage absorbant comportant un dispositif de freinage suivant la revendication 1, modifié en ce que la surface interne de l'extrémité inférieure du fourreau (1) comporte, de haut en bas, une partie à grand diamètre (32) et une partie à faible diamètre (33) séparées par une portée tronconique (31) et que la surface externe de l'extrémité inférieure de la tige de guidage (14) comporte de haut en bas une partie (34) dont le diamètre est très légèrement inférieur au diamètre de la partie (32) à grand diamètre de la surface interne du fourreau, une partie intermédiaire (35) à faible diamètre et une partie (36) dont le diamètre est très légèrement inférieur à la partie (33) à faible diamètre de la surface interne du fourreau (1), une chambre de compression du métal liquide étant ménagée entre la partie (34) à grand diamètre de la tige de guidage (14) et l'épaulement tronconique (31) de la surface interne du fourreau (1) en fin de mouvement vers le bas de la tige de guidage (14), cette chambre de compression ayant comme espace de fuite l'espace annulaire de faible épaisseur entre la partie (33) de la surface interne du fourreau et la partie (36) de la tige de guidage (14).

3. Assemblage absorbant comportant un dispositif de freinage suivant la revendication 1, modifié en ce que la surface interne de l'extrémité inférieure du fourreau 1, porte une pièce tubulaire (40) à axe vertical comportant une partie en saillie vers l'extérieur (40b) séparée de la partie tubulaire supérieure (40d) par une portée tronconique (40c) et que la surface intérieure de la tige de guidage (14) comporte une partie annulaire (43) en saillie vers l'intérieur dont le diamètre intérieur est très légèrement supérieur au diamètre de la partie tubulaire (40d) de la pièce (40), l'extrémité tubulaire (45) de la tige de guidage (14) ouverte vers le bas étant d'un diamètre très légèrement supérieur au diamètre de la partie en saillie (40b) de la pièce (40), une chambre annulaire (47) de compression du métal liquide étant ménagée entre les parties en saillie (43) de la tige de commange (14) et (40b) de la pièce (40), en fin de mouvement, vers le bas de l'élément mobile (10).

## Patentansprüche

1. Absorbierungsbündel für einen schnellen Kernreaktors, der von einem Flüssigmetall gekühlt ist, welches in Berührung mit dem Reaktorkern umläuft, in dem gleiche Neutronenabsorbierungsbündel angeordnet sind, die eine Bremsvorrichtung mit einem festen Teil aufweisen, der von einer Führungshülse (1) eines in vertikaler Richtung bewegbaren Elements (10) gebildet ist, mit seinem unteren Abschnitt in den Kernträger (3) eingreift und innen von dem Flüssigmetall durchströmt wird, wobei die genannte Bremsvorrichtung von einem Teil (25; 31; 40) der Innenfläche des unteren Endes der Hülse (1) und einem Teil (30; 34; 43) des unteren Endes einer Führungsstange (14) gebildet ist, die am Ende der Bewegung der Führungsstange (14) nach unten zusammenarbeiten, um eine Kammer (17; 37; 47) mit einem kleinen Auslaßraum (28) für das Flüssigmetall zur Kühlung zu bilden, gekennzeichnet durch ein bewegbares Element (10), welches von einem hohlen Mantel (12) gebildet ist, der ein neutronenabsorbierendes Material einschließt und an seinem oberen Abschnitt mit einer Verbindungseinrichtung (13) für einen Bewegungsmechanismus in der vertikalen Richtung und an seinem unteren Abschnitt mit der hohlen Führungsstange (14) fest verbunden ist, die vertikal und von großer Länge ist und in ihrem unteren Abschnitt Öffnungen (18) für den Durchgang des Flüssigmetalls im Inneren der Stange (14) und des Mantels (12) des absorbierenden Materials (15) zu dessen Kühlung aufweist, und dadurch, daß die Innenfläche des unteren Abschnitts der Hülse einen Zylinder (25) mit vertikaler Achse trägt, der an seinem oberen Ende zu dem Innenraum der Hülse (1a) offen ist, mit diesem Innenraum einzig über eine Öffnung mit kleinem Durchmesser (28) an seinem unteren Ende in Verbindung steht und Durchlaßöffnungen (26) für das Natrium in seiner Seitenfläche an seinem unteren Abschnitt aufweist, und daß das untere Ende der Führungsstange (17) eine Kugel (30) mit sehr wenig kleinerem Durchmesser als derjenige des Zylinders (25) an seinem unteren Abschnitt trägt, eine Kompressionskammer für das Flüssigmetall am Ende der Bewegung der bewegbaren Gesamtheit (10) nach unten durch die Kugel (30) und den unteren Abschnitt des Zylinders (25) gebildet wird, der den Auslaßraum (28) mit kleinem Durchmesser aufweist.

2. Absorbierungsbündel mit einer Bremsvorrichtung nach Anspruch 1, das derart abgewandelt ist, daß die Innenfläche des unteren Endes der Hülse (1) von oben nach unten einen Abschnitt mit großem Durchmesser (23) und einen Abschnitt mit kleinem Durchmesser (33) aufweist, die durch eine kegelstumpfförmige Tragfläche (31) getrennt sind, und daß die Außenfläche des unteren Endes der Führungsstange (14) von oben nach unten umfaßt einen Abschnitt (34), dessen Durchmesser sehr wenig kleiner als der Durchmesser des Abschnitts (32) mit großem Durchmesser der Innenfläche der Hülse ist, einen Zwischenabschnitt (35) mit kleinem Durchmesser und einen Abschnitt (36), dessen Durchmesser sehr wenig kleiner als der Abschnitt (33) mit kleinem Durchmesser der Innenfläche der Hülse (1) ist, wobei eine Kompressionskammer für das Flüssigmetall zwischen dem Abschnitt (34) mit großem Durchmesser der Führungsstange (14) und der kegelstumpfförmigen Schulter (31) der Innenfläche der Hülse (1) am Ende der Bewegung der Führungsstange (14) nach unten gebildet wird, wobei diese Kompressionskammer als Auslaßraum den Ringraum geringer Dicke zwischen dem Abschnitt (33) der Innenfläche der Hülse und dem Abschnitt (36) der Führungsstange (14) aufweist.

3. Absorbierungsbündel mit einer Bremsvorrichtung nach Anspruch 1, welches so abgewandelt ist, daß die Innenfläche des unteren Endes der Hülse (1) einen rohrförmigen Teil (14) mit vertikaler Achse trägt, der einen nach außen vorspringenden Abschnitt (40b) aufweist, der durch eine kegelstumpfförmige Tragfläche (40c) von dem oberen rohrförmigen Abschnitt (40d) getrennt ist, und daß die Innenfläche der Führungsstangen (14) einen nach innen vorstehenden, ringförmigen Abschnitt (43) aufweist, dessen Innendurchmesser sehr wenig größer als der Durchmesser des rohrförmigen Abschnitts (40d) des Teils (40) ist, das nach unten offene rohrförmige Ende (45) der Führungsstange (14) einen sehr wenig größeren Durchmesser als der Durchmesser des vorspringenden Abschnitts (40b) des Teils (40) aufweist, wobei eine ringförmige Kompressionskammer (40) für das Flüssigmetall zwischen den vorspringenden Abschnitten (43) der Führungsstange (14) und (40b) des Teils (40) am Ende der Bewegung des bewegbaren Elements (10) nach unten gebildet wird.

**Claims**

1. Absorber assembly of a fast neutron nuclear reactor cooled by a liquid metal circulating in contact with the reactor core, in which are placed similar assemblies absorbing neutrons, having a braking device with a fixed part constituted by a guide sleeve (1) of an element (10) mobile in the vertical direction, engaged by its lower part in the core support (3) and internally traversed by the liquid metal, said bring device being constituted by part (25, 31, 40) of the inner surface of the lower end of sleeve (1) and by a part (30, 34, 43) of the lower end of a guide rod (14), cooperating at the end of the downward travel of guide rod (14) for forming a chamber (17, 37, 47) having a small leakage space (28) for the liquid cooling metal, characterized by a mobile element (10) constituted by a hollow envelope (12) containing a neutron absorbing material, integral in its upper part with a connecting means (13) to a displacement mechanism in the vertical direction and in its lower part the vertical, hollow guide rod (14) of considerable length has openings (18) in its lower part for the passage of the liquid metal within rod (14) and of the envelope (12) of the absorbing material (15) for its cooling and by the fact that the inner surface of the lower part of the sleeve carries a vertically axed cylinder (25) open in the internal space of the sleeve (1a) at its upper end, communicating with said internal space solely by a small diameter orifice (28) at its lower end and having passage openings for the sodium (26) in its lateral surface in its upper part and that the lower end of the guide rod (14) carries a sphere (30) of diameter very slightly smaller than the diameter of cylinder (25) in its lower part, a compression chamber for the liquid metal being provided at the end of the downward movement of the mobile assembly (10) by sphere (30) and the lower part of cylinder (25) having the small diameter leakage space (28).

2. Absorber assembly having a bring device according to claim 1, modified in that the inner surface of the lower end of sleeve (1) has, from top to bottom, a large diameter part (32) and a small diameter part (33) separated by a frustum-shaped bearing surface (31) and that the outer surface of the lower end of guide rod (14) has, from top to bottom, a part (34), whose diameter is very slightly smaller than the diameter of the large diameter part (32) of the inner surface of the sleeve, an intermediate small diameter part (35) and a part (36), whose diameter is very slightly less than the small diameter part (33) of the internal surface of sleeve (1), a compression chamber for the liquid metal being provided between the large diameter part (34) of guide rod (14) and the frustum-shaped shoulder (31) of the internal surface of sleeve (1) at the end of the downward travel of guide rod (14), said compression chamber having as the leakage space the annular space of limited thickness between part (33) of the internal surface of the sleeve and part (36) of guide rod (14).

3. Absorber assembly having a braking device according to claim 1, modified in that the inner surface of the lower end of sleeve (1) carries a vertically axed tubular part (40) having an outwardly projecting portion (40b) separated from the upper tubular part (40d) by a frustum-shaped bearing surface (40c) and that the internal surface of the guide rod (14) has an annular, outward projecting portion (43), whose internal diameter is very slightly larger than the diameter of the tubular portion (40d) of part (40), the tubular end (45) of guide rod (14), which is open towards the bottom, has a very slightly larger diameter than that of the projecting portion (40b) of part (40), an annular liquid metal compression chamber (47) being provided between the projecting portions (43) of the guide rod (14) and (40b) of part (40) at the end of the downward movement of the mobile element (10).

Fig 1a

Fig 1b

Fig 1c

# Fig 2a

# Fig2b

# Fig 3a

# Fig 3b